(19) Europäisches Patentamt
European Patent Office
Office européen des brevets

(11) **EP 3 054 417 A1**

(12) **EUROPEAN PATENT APPLICATION**

(43) Date of publication:
**10.08.2016 Bulletin 2016/32**

(51) Int Cl.:
***G06T 5/00*** (2006.01)     ***G06T 5/40*** (2006.01)

(21) Application number: **15305179.2**

(22) Date of filing: **06.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
- **Lasserre, Sébastien**
  **35576 Cesson-Sévigné (FR)**

- **Andrivon, Pierre**
  **35576 Cesson-Sévigné (FR)**
- **Leleannec, Fabrice**
  **35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Method and apparatus for encoding and decoding high dynamic range images**

(57)     An input HDR image may be represented using an SDR image and illumination information, for example, a single modulation value or an illumination map. Generally the single modulation value requires a lower bandwidth while the illumination map may support a higher dynamic range. Which illumination information to be used is adaptively chosen based on the dynamic range of the HDR image. For an HDR image with the dynamic range below a threshold, only the single modulation value is transmitted in the bitstream. Otherwise, a new local illumination information is formed based on a weighted sum of the modulation value and a normalized illumination map. A syntax element is used to indicate whether local illumination information is included in the bitstream. Using the syntax element and the local illumination information, the bitstream provides backward compatibility with decoders supporting different dynamic ranges.

FIG. 5

**Description**

TECHNICAL FIELD

This invention relates to a method and an apparatus for encoding and decoding High Dynamic Range (HDR) images, and more particularly, to a method and an apparatus for adaptively encoding and decoding HDR images based on illumination information.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The dynamic range of luminance in a picture can be defined as a ratio between the highest luminance value of an image and the lowest luminance value of the image:

$$r = \text{bright/dark}$$

where "bright" denotes the highest luminance value of the image and "dark" denotes the lowest luminance value of the image. The dynamic range "r" is generally expressed as a number of power of two, called f-stops or equivalent stops. For instance, a ratio 1000 is about 10 f-stops, which is the typical dynamic range of standard non-HDR videos, also called SDR (Standard Dynamic Range) videos or equivalently LDR (Low Dynamic Range) videos.

The dynamic range of an image can be very high, and may be well beyond the range that can be represented by standard image formats, such as the 8-10 bits gammatized formats used in broadcasting or PC imaging. Here the term "gammatized formats" refer to image formats represented in a non-linear domain. For example, linear components, such as, but not restricted to, RGB and Y, are transformed into the gammatized domain by using a non-linear function that can be a power function, a logarithm or an OETF (Opto-Electronic Transfer Function) such as those defined in the ITU-R Recommendation BT.709/BT.2020.

Different images may be represented by different formats, and have different dynamic ranges. For instance, we consider an image I whose luminance is expressed linearly in nits by an element Y. The value of Y may correspond to the true luminosity of a captured scene in a so-called "scene reference" format (i.e., in the file format Y=1 corresponds to 1 nit of luminance in the captured scene, Y=x corresponds to x nits). The range of Y may cover all possible luminance ranges of image scenes captured by a camera, for instance. By varying the optics (filters, aperture) and/or sensors (exposure time, ISO) of a camera, the range of scenes can be very high. Very dark scenes like telescope observation (e.g., using long exposure time) or very bright scenes like sunsets (e.g., using very small aperture and strong filters) are both possible, leading to very dark and very bright pictures. Consequently, the dynamic range may be well over 15 f-stops.

The value of element Y may also be used to represent the luminosity provided by a display on which the image has been post-produced in a so-called "display reference" format (i.e., in the file format Y=1 corresponds to 1 nit of luminance rendered by a display used for the grading, Y=x corresponds to x nits). The dynamic range provided by the "display reference" format is usually much lower than that of a "scene reference" format. This results in a more limited dynamic range and peak luminance of the associated pictures. For example, these images may have a dynamic range of 15 f-stops and a peak luminance of 1000 nits, as those defined in some restricted broadcasting-oriented specification.

Often an image or video of a high dynamic range is called a High Dynamic Range (HDR) image or video. The exact dynamic range that an HDR video application supports may vary. For example, the SMPTE (Society of Motion Picture and Television Engineers) defines a Perceptual Quantizer EOTF (Electro-Optical Transfer Function) also known as PQ EOTF (defined in SMPTE ST. 2084) non-linear transfer curve, preferably coded on 12 bits, which may code the luminance on the range from 0.005 nits to 10000 nits (nit is a term referring to candela per square meter units or cd/m$^2$, a unit for light intensity), leading to a ratio of 2 million or about 21 f-stops. Practically, first deployments of HDR at home may be expected to be TV sets providing not much more than a peak brightness of 1000 nits and a dynamic range of 15 f-stops, preferably on 10 bits data format if possible. This restricted HDR is also referred to as Extended Dynamic Range (EDR). Typically, an SDR video has a bit depth of 8 or 10 bits, and an HDR video has a bit depth of 10 bits and higher. For example, an SDR video can be a 4:2:0 Y'CbCr 10-bit video, and an HDR video can be a PQ OETF Y'CbCr 12-bit video.

In the present application, for ease of notation, we classify HDR videos into EDR videos and "strictly HDR" videos, where the EDR videos refer to the videos with a dynamic range between 10 and 15 f-stops, and the "strictly HDR" videos refer to those above 15 f-stops, as illustrated in TABLE 1.

**TABLE 1**

|  |  | Dynamic range |
|---|---|---|
| SDR |  | $r \leq 10$ f-stops |
| HDR | EDR | 10 f-stops $< r \leq 15$ f-stops |
|  | Strictly HDR | $r > 15$ f-stops |

In order for HDR images to be displayed on SDR devices such as TV sets or computer monitors, the images should be converted to become viewable (i.e., in a format compatible with the display device, and preserve the overall perceived brightness and colorfulness of the HDR videos) on the SDR devices. We denote by R the data range on which the luminance Y should be mapped, for instance R =[0,255] for an 8-bit SDR format or R=[0,1023] for a 10-bit SDR format with a standard EOTF defined by ITU-R BT.709 or BT.2020.

An "absolute" mapping function

$$\pi : \text{linear domain} \rightarrow R,$$

which maps a value from a linear domain to a data range $R$, can be used for the conversion. Here "absolute" should be understood as that a mapped value corresponds to a unique input value, i.e., the mapping function is not adapted to the content. Such an "absolute" mapping, which maps luminance Y from a linear domain to the data range $R$ does not always work well. **For** example, it may map very dark scenes uniformly to zero and very bright scenes to the upper bound (e.g., 255 or 1023) of the data range supported by the output device.

SUMMARY

According to an aspect of the present principles, a method for processing a High Dynamic Range (HDR) picture is presented, comprising: accessing the HDR picture; and generating a bitstream including a Standard Dynamic Range (SDR) picture responsive to the HDR picture, wherein the bitstream is generated based on both a modulation value and local illumination information. The present embodiment also provide an apparatus for performing these steps.

The present embodiment also provide a computer readable storage medium having stored thereon instructions for processing a High Dynamic Range (HDR) picture according to the methods described above.

According to another aspect of the present principles, a method for processing a bitstream is presented, comprising: accessing a modulation value included in the bitstream; accessing a syntax element indicative of whether local illumination information is included in the bitstream; and generating a High Dynamic Range (HDR) picture responsive to a Standard Dynamic Range (SDR) picture included in the bitstream, the modulation value and the syntax element. The present embodiment also provide an apparatus for performing these steps.

The present embodiment also provide a computer readable storage medium having stored thereon instructions for processing a bitstream according to the methods described above.

BRIEF DESCRIPTION OF THE DRAWINGS

FIG. 1 is a flowchart illustrating an exemplary method for converting an HDR image to an SDR image, according to an embodiment of the present principles.

FIG. 2 illustrates pictorial examples of functions mapping HDR luminance to SDR luminance, according to an embodiment of the present principles.

FIG. 3 is a pictorial example illustrating an exemplary RGB HDR image.

FIG. 4 is a pictorial example illustrating a corresponding illumination map.

FIG. 5 illustrates an exemplary SDR/EDR/HDR distribution workflow.

FIG. 6 is a flowchart illustrating an exemplary method for encoding an HDR video, according to an embodiment of the present principles.

FIG. 7 is a flowchart illustrating an exemplary method for decoding an HDR video, according to an embodiment of the present principles.

FIG. 8 illustrates a block diagram depicting an exemplary system in which various aspects of the exemplary embodiments of the present principles may be implemented.

FIG. 9 illustrates a block diagram depicting an example of a video processing system that may be used with one or more implementations.

FIG. 10 illustrates a block diagram depicting another example of a video processing system that may be used with one or more implementations.

DETAILED DESCRIPTION

The present principles are directed to method and apparatus for encoding and decoding an HDR video. In order for an HDR bitstream to be compatible with existing devices, an HDR image may be represented by an SDR image and illumination information, for example, a single modulation value or an illumination map. In the present application, we use the terms "image," "frame" and "picture" interchangeably to identify a sample array, often containing values for multiple components.

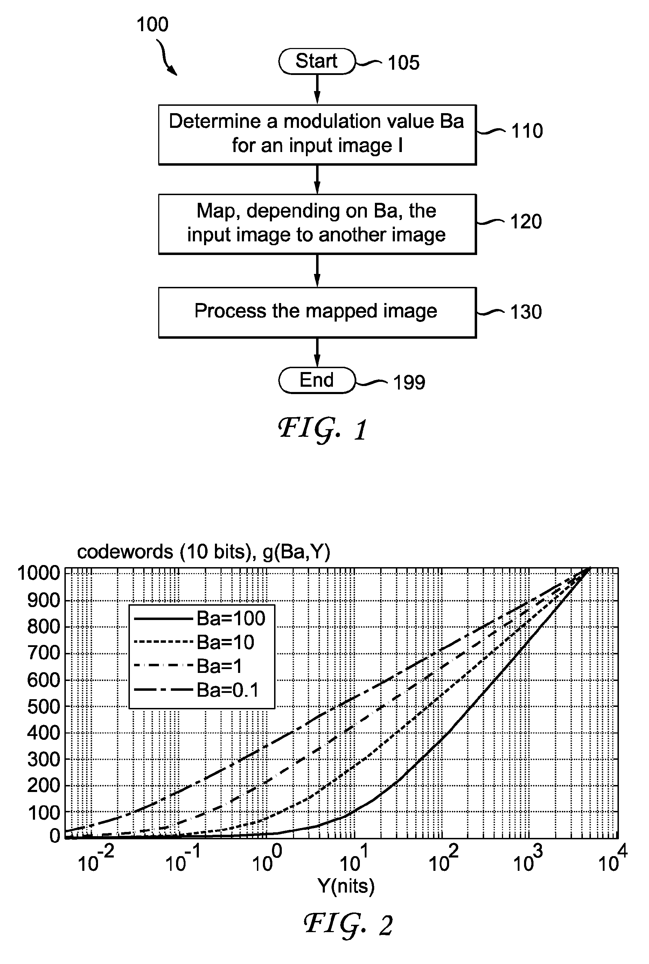

FIG. 1 illustrates an exemplary method 100 for converting an HDR image to an SDR image according to the present principles. Method 100 starts at step 105. At step 110, it determines a single modulation value Ba for the whole HDR image I. In one embodiment, the modulation value Ba is representative of the mid-tone value of the image I such that the normalized luminance Y (i.e., Y/Ba) is essentially centered around the value 1.

At step 120, the input HDR image I is converted to an SDR image depending on the modulation value. In one embodiment, the adaptation of ranges may be formulated as:

$$\pi_{Ba}: [0,P] \rightarrow R, \qquad\qquad (1)$$

where P is the maximum brightness (1000 nits for instance) of a pixel allowed by the input HDR format. The mapping $\pi_{Ba}$ can be decomposed as follows:

$$\pi_{Ba}: Y \in [0,P] \mapsto Y/Ba \in [0,P/Ba] \mapsto g(Y/Ba) \in R. \qquad (2)$$

That is, the luminance Y of the HDR image is first normalized by *Ba*, and then mapped to the range represented by *R*, for example, using a function $g()$, where $g()$ is a function possibly depending on Ba, i.e., $g()=g_{Ba}()$, and the function $g()$ may map 1 to the middle value of the data range R. The mapped image is then processed at step 130, for example, encoded and transmitted. Method 100 ends at step 199.

In one embodiment, the following mapping function can be used to reduce the dynamic range and map an HDR picture to an SDR picture:

$$g_{Ba}(z) = M_{SDR} \, f(z)/f(P/Ba) \qquad\qquad (3)$$

where $M_{SDR}$ is the maximum SDR luma or luminance value, and $f()$ is a function. In one example, f can be an Slog function of the form

$$f(z) = a \, ln(b+z) + c \qquad \text{with } f(0)=0. \qquad\qquad (4)$$

The inverse process (i.e., SDR to HDR mapping) at the decoder side can then be derived as:

$$Y_{HDR} = Ba \times f^{-1}( f(P/Ba) L_{SDR}/M_{SDR}) \qquad (5)$$

where $L_{SDR}$ is the luminance of the SDR picture, and in the case of the Slog function f, its inverse $f^1$ is $f^1(z) = exp((z-c)/a)-b$.

In general, the choice of the modulation value should preserve information at the very dark level and also preserve details in the mid-tone range (i.e., the neighborhood of the mid-tone value). Thus, in one embodiment, we use a mid-tone optimization technique. Specifically, we use two conditions when deriving the modulation value: (1) the blacks are not clipped down to zero too aggressively; and (2) the number of codewords in the SDR image used to represent the mid-tone range of the HDR image is maximized.

Exemplary mapping functions $\pi_{Ba}$ are shown in FIG. 2. As can be seen from FIG. 2, the mapping curve adapts to the modulation value Ba, which usually increases as the HDR image gets brighter in general. For a larger modulation value, the mapping curve preserves more details in the bright areas because its derivative near the peak luminance is large, and for a lower modulation value, the mapping curve preserves more details in the darkest areas because it drops to zero slowly for very small values of Y.

In other embodiments, different methods can be used to calculate the modulation value, for example, but not limited to, using an average, median, minimum or maximum value of the luminance of the image I. These operations may be performed in the linear luminance domain or in a non-linear domain such as $ln(I)$ or $I^\gamma$ with $\gamma<1$.

To improve the mapping curves, some bounds can be imposed on the Ba value in order to avoid over-shooting in both very dark frames (Ba too low) and very bright frames (Ba too high). For example, we may set the Ba value to

$$Ba_{att} = \text{Clip}_{[Ba_{min}, Ba_{max}]} Ba_{mid} + \sigma(Ba - Ba_{mid}) \qquad (6)$$

to determine an attenuated backlight $Ba_{att}$, with visually determined values $Ba_{min}$ 2 nits, $Ba_{max}$ 50 nits, $Ba_{mid}$ = 5 nits and the attenuation factor $\sigma=0.5$. This may provide modulation values closer to visually optimal ones, as shown in Table 2, where the first image of each sequence is used for testing.

**Table 2**

| Attenuation Factor = 0.5 | | | | Visual | |
|---|---|---|---|---|---|
| Sequence | BW | Found Ba | Attenuated Ba | low | high |
| Balloon | 45.254831 | 70.188095 | 37.594048 | 35 | 50 |
| Campagne | 215.269482 | 503.391815 | 50 | 35 | 50 |
| Cathedrale | 0.784584 | 0.637649 | 2.818825 | 4 | 4 |
| FireEater 90 | 0.450625 | 0.348304 | 2.674152 | 1 | 2 |
| FireEater 119 | 2.979355 | 2.863542 | 3.931771 | 2 | 3 |
| Market | 43.713286 | 67.502548 | 36.251274 | 35 | 50 |
| Seine | 6.498019 | 6.888589 | 5.944295 | 3 | 5 |
| Tibul2_80 | 1.36604 | 1.190355 | 3.095178 | 4 | 6 |
| Tibul2_109 | 11.712686 | 13.634524 | 9.317262 | 7 | 7 |

Through experiments, we obtain an interval of modulation values that optimizes the visual quality of the compressed video, and we use "low" and "high" to refer to the lower and upper bounds of an interval, respectively. As can be seen from Table 2, the intervals vary with the video sequences.

From the experiments, we also observe that the modulation value affects the compression performance, but not in an extremely sensitive manner. In particular, if a modulation value is close to the [low, high] interval, the compression performance is close to be visually optimal. Here, we see from Table 2 that the attenuated modulation value either falls within the [low, high] interval or is close to the interval. Thus, the modulation value determined according to the present principles is optimal or close to visually optimal ones.

From Table 2, we can see that usually the modulation value can reflect the overall brightness level and provide an overall brightness impression of an input image. For example, the brighter the input HDR image is, the higher the single modulation value might be. Video sequences "Balloon" and "Market" consist of very bright scenes containing a sunset or scenes taken in the midday in the summer, and their modulation values are consequently higher than other sequences such as "Cathedrale" and "FireEater," which consist of very dark scenes taken inside a cathedral or at night.

In a video sequence, a value Ba can be computed for each frame. In order to avoid temporal inconsistency in scenes with rapid brightness changes, a temporal stabilization is desirable. Fast changing videos, like a scene showing an explosion or a fireworks, may cause modulation values to vary rapidly from frame to frame and cause annoying illumination effects. For instance, we assume a scene with a static background and a sudden flash (like an explosion or fireworks) in the foreground. Due to the flash, the white W will increase, as well as M and then Ba. As can be seen from FIG. 2, when Ba is high, the mapping curve suppressed the dark more, and this may induce an unexpected sudden darkening of the background in the resulted SDR picture. To prevent such an unnatural and annoying temporal variation of the luminosity in the resulting SDR video, we propose temporal stabilization to smooth the overall luminosity variation of the SDR video.

An exponential stabilization method can be used. Let $Ba^n$ be the modulation determined at frame n, and $Ba^{t,n}$ the modulation value after temporal stabilization. We may use the following scheme

$$Ba^{t,n} = \lambda Ba^n + (1 - \lambda)Ba^{t,n-1} \qquad (7)$$

with $\lambda$ adapted to the frame rate. Other temporal smoothing filters may be used for stabilizing the modulation values.

In the above, we discussed converting an HDR image to an SDR image using a single modulation value. In another embodiment, we may convert the HDR image to an SDR image using an illumination map, which may represent the backlight of the HDR content.

Here, the term backlight is used by analogy with TV sets made of a color panel, such as an LCD panel, and a rear illumination apparatus, such as an LED array. The rear apparatus, usually generating white light, is used to illuminate the color panel to provide more brightness to the TV. As a consequence, the luminance of the TV is the product of the luminance of rear illuminator and the luminance of the color panel. This rear illuminator is often called "backlight."

Given the illumination map, a residual frame (i.e., the SDR frame) is then obtained by dividing the HDR frame by the illumination map. Referring back to the analogy where HDR is equal to SDR times backlight, the SDR frame could be understood as the response of the (SDR) color panel. The illumination map, which can be represented by a two-dimensional array $Ba_{map}(x,y)$, may have a lower resolution compared to the HDR image. The SDR frame can be obtained by a pixel-by-pixel division of the HDR pixels by their co-located backlight pixels, possibly after an up-sampling of $Ba_{map}(x,y)$ to match the HDR image resolution.

The SDR frame and the illumination map may have different formats from each other, for example, the illumination map may be monochrome and the SDR frame may use a Y'CbCr or an RGB format. Also, each component can have different formats (for example, Y'CbCr, YUV, RGB and XYZ).

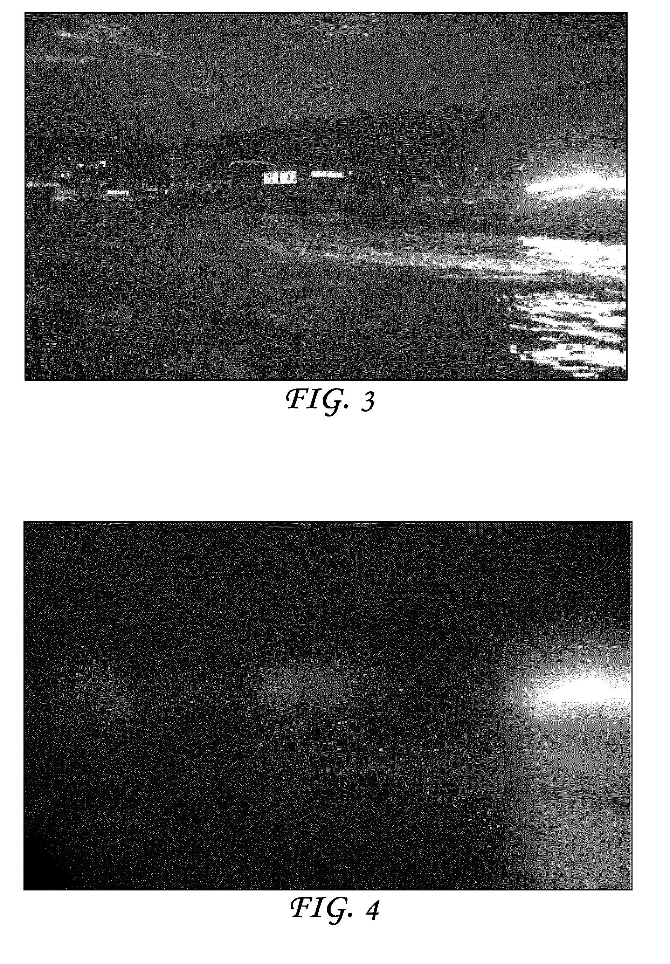

FIG. 3 illustrates an exemplary RGB HDR image, and FIG. 4 illustrates a corresponding illumination map. As can be seen from FIGs. 3 and 4, the illumination map generally reflects the brightness level in the HDR image with more spatial smoothness than the image itself. While the single modulation value provides an overall brightness impression of the HDR image, the illumination map tracks the brightness in the HDR image at a finer granularity. Thus, we also refer to a sample in the illumination map as a local backlight, or a local modulation value. In the present application, we also refer to both the single modulation value and the illumination map as illumination information.

A single modulation value provides a constant value in a corresponding area, for instance the whole HDR image or a slice in the HDR image. Generally, a corresponding area for a single modulation value contains many pixels. On the other hand, an illumination map provides a pixel-dependent illumination that tracks the HDR image luminance more closely. The illumination map can be provided by a monochromatic image whose definition may be smaller than the HDR image. In this case, the monochromatic image is up-sampled to the HDR image definition to get an illumination for each pixel of the HDR image. Thus "local" should be understood as an illumination information is used for each pixel or a few pixels. In the present application, we refer to any type of illumination information that is pixel based or applied to a few pixels as local illumination information.

The conversion from HDR images to SDR images, for example, based on a single modulation value or an illumination map as discussed above, can be used in different applications, for example, but not limited to, tone mapping, compression using SDR codecs after mapping HDR to SDR and then compressing the SDR, HDR distribution that is compatible with SDR formats.

In the present application, the various encoders, decoders and devices that support SDR videos, but not HDR videos, are referred to as SDR (or non-HDR) encoders, decoders and devices, respectively, and the various encoders, decoders and devices that support HDR videos are referred to as HDR encoders, decoders and devices, respectively. In the present application, we call a system that handles HDR videos with backward compatibility with SDR videos as an SDR/HDR system.

We observe that depending on the dynamic range of the HDR image, one type of illumination information may work better than another type. For instance, a single modulation value should require less bandwidth than an illumination map, while the illumination map may be able to handle an input HDR image with a higher dynamic range than a single modulation value could. Thus, when deciding which illumination information to use when converting an HDR image into an SDR image, we may consider both the compression efficiency and the quality of the reconstructed HDR image. In particular, we observe that there is a threshold in terms of the dynamic range below which the illumination map does not improve the quality, relatively to a single modulation value, but requires more bandwidth. Thus, below this threshold, a single modulation value is preferred. On the other hand, above this threshold, the illumination map becomes advantageous in terms of quality.

Here we make differentiations between decoders that can handle EDR videos and strict HDR videos. We assume that an EDR decoder can handle a single modulation value for an image, but not local illumination information, while a strict HDR decoder can handle local illumination information.

In Table 3, we use pseudo code to illustrate an exemplary bitstream for a strict HDR video that is also backward compatible with both an SDR decoder and an EDR decoder.

TABLE 3

```
Bitstream ()
{
    // to be decoded by SDR, EDR, and strict HDR decoders
    SDR image;
    if ( illumination present )
    {
        // to be decoded by EDR and strict HDR decoders
        Single modulation value;
        if ( local illumination information present )
        {
            // to be decoded by strict HDR decoders
            Local illumination information;
        }
    }
}
```

The encoder decides whether or not local illumination is needed, for instance by deciding whether or not the HDR dynamic range is above a threshold, and it encodes its decision by using a flag to signal the presence of local illumination information.

Upon receiving a bitstream, if the decoder is an SDR decoder, it discards illumination information completely. Otherwise, if the decoder is an EDR decoder, it decodes the single modulation value, but discards local illumination information. Then if it is a strict HDR decoder, it decodes both the single modulation value and local illumination information, which can be used to determine the illumination map, to recover the strict HDR video.

In Table 4, we show what output videos a decoder may get depending on what is contained in the bitstream.

TABLE 4

| Information contained in the bitstream | SDR decoder output | EDR decoder output | Strict HDR decoder output |
|---|---|---|---|
| SDR image | SDR video | SDR video | SDR video |
| SDR image + single modulation value | SDR video | EDR video | EDR video |
| SDR image + single modulation value + local illumination information | SDR video | EDR video | Strict HDR video |

According to the present embodiment, an SDR decoder is able to decode an SDR image corresponding to the original HDR image. In other words, the method is backward compatible from HDR to SDR. This is advantageous compared to the direct distribution of the HDR image under a dedicated HDR format because an SDR decoder could not decode the stream and nothing would be displayed. Our proposed method is also advantageous over simultaneous distribution of both SDR and HDR bitstreams, which would virtually double the required bandwidth and may be unacceptable for broadcast applications.

Also, the evolution from SDR to HDR, for example, in broadcasting, is likely to occur gradually, with a first phase allowing EDR distribution and a second phase going up to strict HDR distribution. Our solution that works with EDR and strict HDR decoders is advantageous as it allows an extra backward compatibility from strict HDR to EDR because an HDR bitstream (for example, one containing an SDR image, a single modulation value, and local illumination information) can be decoded by an EDR decoder by taking the EDR substream (for example, the bits corresponding to the SDR image and single modulation value) of the HDR bitstream. This allows the SDR/EDR/HDR distribution in one single bitstream without the need of simulcasting three bitstreams.

Again, as can be seen from Table 4, a bitstream generated according to the present principles can be decoded by SDR, EDR and strict HDR decoders. Thus, the present embodiments allow encoding of strict HDR images, while ensuring backward compatibility with SDR or EDR devices. Advantageously, our proposed techniques may be the foundation of an SDR/ EDR/HDR system with both (EDR to SDR) and (strict HDR to EDR) backward compatibilities.

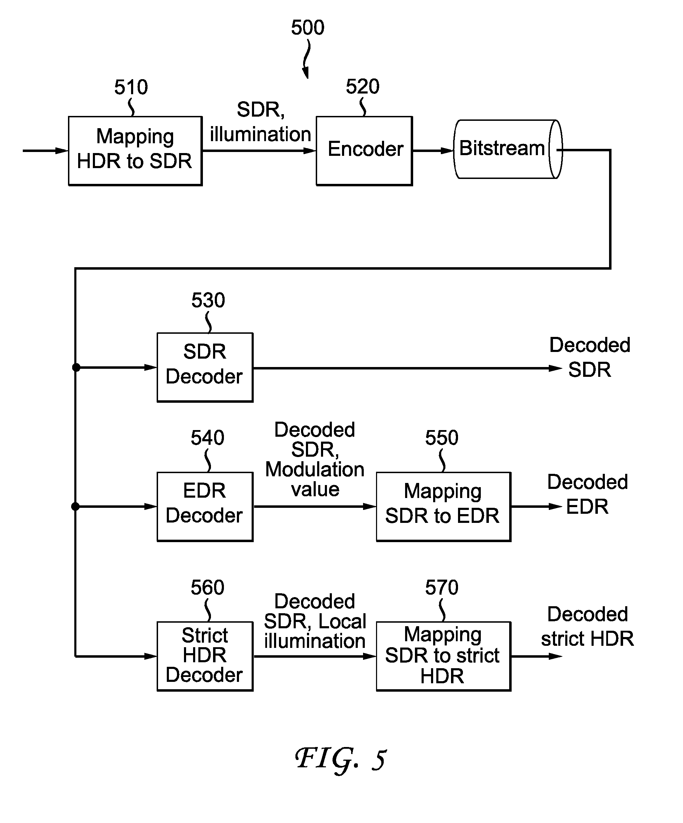

FIG. 5 illustrates an exemplary SDR/EDR/HDR distribution workflow 500 that transmits HDR videos while providing backward compatibility with SDR and EDR decoders. In workflow 500, an HDR frame is processed to obtain a corresponding SDR frame and illumination information (510), for example, a single modulation value and/or an illumination map. Subsequently, both the illumination information and the SDR frame are encoded (520) into a bitstream, using, for example, but not limited to, an H.264/AVC or H.265/HEVC encoder.

At the decoding side, the SDR frame can be decoded using an SDR decoder for backward compatibility (530), which provides a decoded SDR video as output. Alternatively, both the SDR frame and the illumination information can be decoded using an HDR decoder (540, 560). Using the decoded SDR frame and illumination information, for example, the modulation value only, the SDR frame can be mapped to a decoded EDR frame (550). The mapping from SDR to EDR (550) can also be performed by the EDR decoder (540). Or, using the decoded SDR frame and illumination information, for example, local illumination information, the SDR frame can be mapped to a decoded strict HDR frame (560). The mapping from SDR to strict HDR (570) can also be performed by the strict HDR decoder (560).

To adapt the illumination to the dynamic range $\rho$ of the input HDR image, we propose to formulate new local illumination information as

$$\mathrm{Ba'}(x,y) = \mathrm{Ba} + \lambda(\rho)\mathrm{Ba_{2D}}(x,y) \qquad (8)$$

where $\lambda$ is a parameter, and $\mathrm{Ba_{2D}}$ is a reduction of the illumination map $\mathrm{Ba_{map}}(x,y)$ and $\mathrm{Ba_{2D}}$ has a zero mean and normalized amplitude. The dynamic range $\rho$ of the input HDR image is based on the peak luminance P, which is usually determined by the format and does not vary from frame to frame, and can be defined as $\rho=\log_2(P/m)$, where m is representative of the luminance of the darkest area of the image. Mathematically, we first define local illumination with a zero mean as

$$\mathrm{Ba_{2D,0}}(x,y) \quad := \mathrm{Ba_{map}}(x,y) - <\mathrm{Ba_{map}}(x,y)> \qquad (9)$$

where <.> stands for the 2D mean operator. Then, a normalization is performed

$$\mathrm{Ba_{2D}}(x,y) = \mathrm{Ba_{2D,0}}(x,y) /N \qquad (10)$$

where N is the maximum amplitude of $\mathrm{Ba_{2D,0}}(x,y)$ defined by

$$N := \max_{(x,y)} |\mathrm{Ba_{2D,0}}(x,y)| \qquad (11)$$

such that $\mathrm{Ba_{2D}}$ is in the range of [-1,1] and has a zero mean.

In one example, we may define

$$\lambda(\rho) = \begin{cases} 0 & \text{if } \rho \leq \rho_{\mathrm{HDR}} \\ \rho - \rho_{\mathrm{HDR}} & \text{otherwise} \end{cases}. \qquad (12)$$

Thus, parameter λ is set to zero if the dynamic range ρ is below a threshold $\rho_{HDR}$, i.e.,

$$\rho \leq \rho_{HDR} \quad => \quad \lambda(\rho)=0. \qquad (13)$$

When the dynamic range ρ exceeds the threshold $\rho_{HDR}$ ($\rho > /\rho_{HDR}$), the resulting new illumination information has a dynamic of $\rho - \rho_{HDR}$. The threshold $\rho_{HDR}$ can take different values depending on the bit depth of the workflow (i.e., the bit depth supported by the SDR decoder). For instance, $\rho_{HDR}$ is 15 f-stops for a 10-bit broadcast-oriented workflow, or $\rho_{HDR}$ is 18 f-stops for a professional-oriented 12-bit workflow.

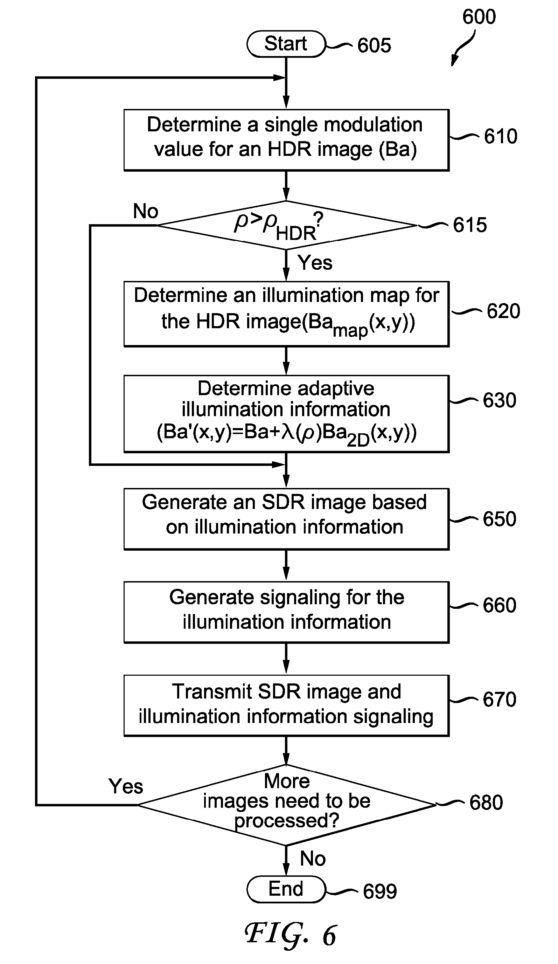

FIG. 6 illustrates an exemplary method 600 for adapting the illumination information based on the dynamic range of an HDR video, according to an embodiment of the present principles. Method 600 starts at step 605. At step 610, it determines a single modulation value Ba, for example, using mid-tone optimization. At step 615, it checks whether the dynamic range ρ, that depends on the image content, of the input HDR image exceeds a threshold $\rho_{HDR}$. If yes, at step 620, it determines an illumination map $Ba_{map}(x,y)$, and at step 630, it determines adaptive local illumination information based on the single modulation value and the illumination map, for example, as shown in Eq. (8). Otherwise, if ρ does not exceed $\rho_{HDR}$, it passes the control to step 650. At step 650, it generates the SDR image representative of the HDR image based on the illumination information, for example, based on Eq. (2) if the single modulation value is used as the illumination information, or by a pixel-by-pixel division of the HDR pixels by co-located samples in the adaptive local illumination information.

For a receiver to understand what illumination information is used, the illumination formulation is signaled to the receiver at step 660. In one embodiment, in the bitstream, one may signal the following elements for each frame:

- a coded value for Ba, which can be signaled explicitly or implicitly;
- a flag F signaling whether $\rho > \rho_{HDR}$, i.e., whether local illumination information is present; and
- if F is true, the local illumination information $\lambda(\rho)Ba_{2D}(x,y)$.

At step 670, the SDR frame is encoded and transmitted together with the information signaling the illumination information. At step 680, it checks whether there are more HDR images to be processed in the HDR video. If yes, it returns the control to step 610. Method 600 ends at step 699.

The steps in method 600 may proceed at a different order from what is shown in FIG. 6, for example, step 680 may be performed before step 660. That is, the illumination information for all images in the video is first obtained before it is encoded.

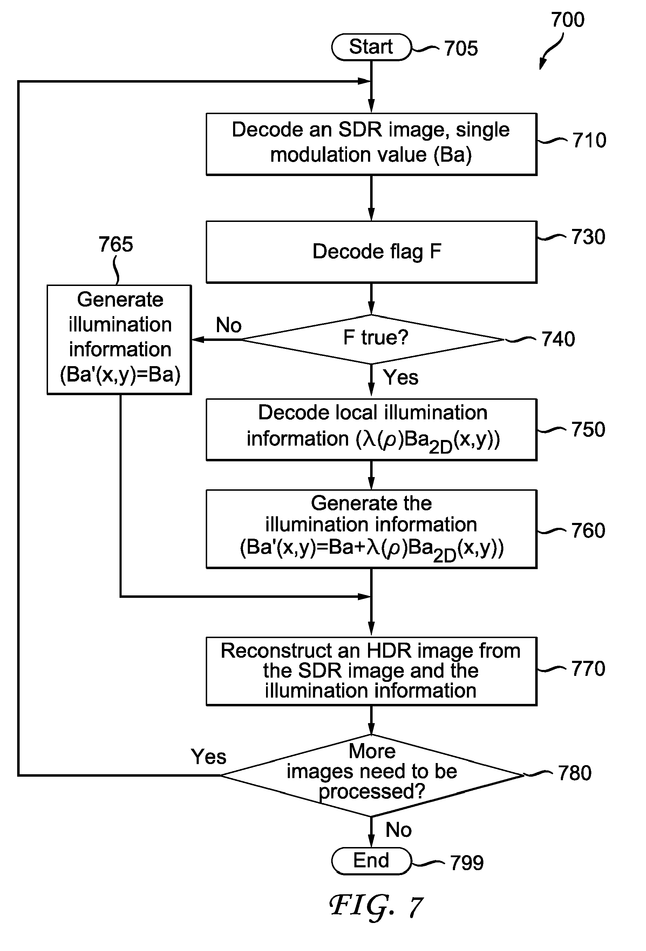

FIG. 7 illustrates an exemplary method 700 for reconstructing a video based on adaptive illumination information, according to an embodiment of the present principles. Here we first assume the decoder can handle a strict HDR video.

Method 700 starts at step 705. It may accept a bitstream, for example, one generated according to method 600, as input. At step 710, it decodes an SDR image and a single modulation value from the bitstream. At step 730, it decodes a flag F signaling the presence of local illumination information.

If flag F is false, no local illumination information is available in the bitstream. Therefore, at step 765, the illumination information is set to the modulation value. At step 770, an HDR image (more specifically, an EDR image) can be reconstructed from the decoded SDR image and the illumination information, for example, using Eq. (5).

If flag F is true, local illumination information is available in the bitstream. (i.e., the HDR video to be decoded is a strict HDR video). At step 750, local illumination information $\lambda(\rho)Ba_{2D}(x,y)$ is decoded. At step 760, the adaptive illumination information is generated based on the single modulation value Ba and the local illumination information $\lambda(\rho)Ba_{2D}(x,y)$. At step 770, an HDR image (more specifically, a strict HDR image) can be reconstructed from the decoded SDR image and the illumination information. At step 780, it checks whether more images need to be processed. If yes, it returns control to step 710. Otherwise, it ends at step 799.

Now we assume that the decoder can handle EDR videos, but not strict HDR videos. Since an EDR decoder cannot handle local illumination, the decoder uses the single modulation value Ba as the illumination information, without using local illumination $\lambda(\rho)Ba_{2D}(x,y)$ even if it is present in the bitstream. That is, an EDR decoder may skip steps 730, 740, 750, 760 and 765 shown in method 700 when decoding a bitstream.

If a strict HDR video is sent and an EDR decoder is used, the decoded EDR image would differ from a strict HDR image that could have been obtained by a strict HDR decoder. The difference is mainly caused by skipping the local illumination $\lambda(\rho)Ba_{2D}(x,y)$. As $\lambda(\rho)=0$ for $\rho \leq \rho_{HDR}$ and λ is continuous, the value of $\lambda(\rho)$ in a neighborhood of $\rho_{HDR}$ is small and the difference $\lambda(\rho)Ba_{2D}(x,y)$ is small because $Ba_{2D}(x,y)$ is bounded into [-1,1] by construction. Consequently, if the dynamic range of the strict HDR video is only marginally higher than $\rho_{HDR}$, then the difference in the reconstructed EDR image and the strict HDR image that could have been obtained is small and the resulting decoded EDR image remains reasonably close to the original HDR image.

If the decoder is an SDR decoder which is not compatible with HDR videos, the syntax related to the illumination information would be discarded and only the SDR image is decoded.

In the above, various numeric values are discussed in different operations. These numeric values are for exemplary purposes and can be adjusted based on applications. For example, when the SDR video was discussed above mainly as a 10-bit video, the SDR video can also take other dynamic ranges or bit depths. The values of parameters, for example, $\rho_{HDR}$, can also be adjusted based on the user requirements or the system configurations. In addition, when we discussed that a single modulation value is used for an entire frame, we can also have a modulation value for a picture area, for example, a slice or a tile when the picture has a very high resolution.

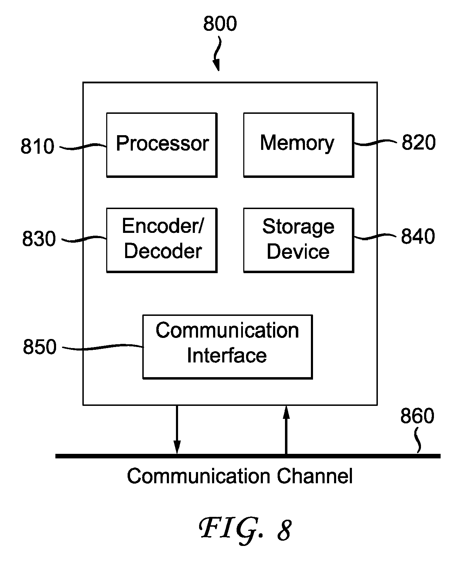

FIG. 8 illustrates a block diagram of an exemplary system in which various aspects of the exemplary embodiments of the present principles may be implemented. System 800 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 800 may be communicatively coupled to other similar systems, and to a display via a communication channel as shown in FIG. 8 and as known by those skilled in the art to implement the exemplary video system described above.

The system 800 may include at least one processor 810 configured to execute instructions loaded therein for implementing the various processes as discussed above. Processor 810 may include embedded memory, input output interface and various other circuitries as known in the art. The system 800 may also include at least one memory 820 (e.g., a volatile memory device, a non-volatile memory device). System 800 may additionally include a storage device 840, which may include non-volatile memory, including, but not limited to, EEPROM, ROM, PROM, RAM, DRAM, SRAM, flash, magnetic disk drive, and/or optical disk drive. The storage device 840 may comprise an internal storage device, an attached storage device and/or a network accessible storage device, as non-limiting examples. System 800 may also include an encoder/decoder module 830 configured to process data to provide an encoded video or decoded video.

Encoder/decoder module 830 represents the module(s) that may be included in a device to perform the encoding and/or decoding functions. As is known, a device may include one or both of the encoding and decoding modules. Additionally, encoder/decoder module 830 may be implemented as a separate element of system 800 or may be incorporated within processors 810 as a combination of hardware and software as known to those skilled in the art.

Program code to be loaded onto processors 810 to perform the various processes described hereinabove may be stored in storage device 840 and subsequently loaded onto memory 820 for execution by processors 810. In accordance with the exemplary embodiments of the present principles, one or more of the processor(s) 810, memory 820, storage device 840 and encoder/decoder module 830 may store one or more of the various items during the performance of the processes discussed herein above, including, but not limited to the modulation value, the SDR video, the HDR video, equations, formula, matrices, variables, operations, and operational logic.

The system 800 may also include communication interface 850 that enables communication with other devices via communication channel 860. The communication interface 850 may include, but is not limited to a transceiver configured to transmit and receive data from communication channel 860. The communication interface may include, but is not limited to, a modem or network card and the communication channel may be implemented within a wired and/or wireless medium. The various components of system 800 may be connected or communicatively coupled together using various suitable connections, including, but not limited to internal buses, wires, and printed circuit boards.

The exemplary embodiments according to the present principles may be carried out by computer software implemented by the processor 810 or by hardware, or by a combination of hardware and software. As a non-limiting example, the exemplary embodiments according to the present principles may be implemented by one or more integrated circuits. The memory 820 may be of any type appropriate to the technical environment and may be implemented using any appropriate data storage technology, such as optical memory devices, magnetic memory devices, semiconductor-based memory devices, fixed memory and removable memory, as non-limiting examples. The processor 810 may be of any type appropriate to the technical environment, and may encompass one or more of microprocessors, general purpose computers, special purpose computers and processors based on a multi-core architecture, as non-limiting examples.

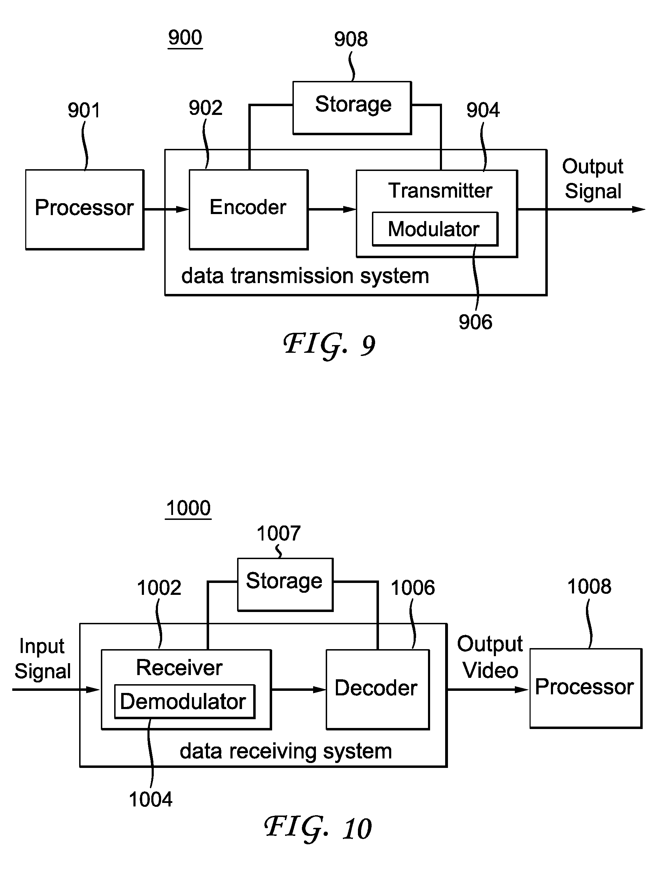

Referring to FIG. 9, a data transmission system 900 is shown, to which the features and principles described above may be applied. The data transmission system 900 may be, for example, a head-end or transmission system for transmitting a signal using any of a variety of media, such as, satellite, cable, telephone-line, or terrestrial broadcast. The data transmission system 900 also may be used to provide a signal for storage. The transmission may be provided over the Internet or some other network. The data transmission system 900 is capable of generating and delivering, for example, video content and other content.

The data transmission system 900 receives processed data and other information from a processor 901. In one implementation, the processor 901 generates the HDR video and/or represents an HDR picture using a single modulation value and an SDR picture representative of the HDR picture, for example, using method 100. The processor 901 may also provide metadata to 900 indicating, for example, the function used in the mapping curves or the values of constants.

The data transmission system or apparatus 900 includes an encoder 902 and a transmitter 904 capable of transmitting the encoded signal. The encoder 902 receives data information from the processor 901. The encoder 902 generates an encoded signal(s), for example, using 600.

The encoder 902 may include sub-modules, including for example an assembly unit for receiving and assembling various pieces of information into a structured format for storage or transmission. The various pieces of information may include, for example, coded or uncoded video, and coded or uncoded elements. In some implementations, the encoder 902 includes the processor 901 and therefore performs the operations of the processor 901.

The transmitter 904 receives the encoded signal(s) from the encoder 902 and transmits the encoded signal(s) in one or more output signals. The transmitter 904 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 906. The transmitter 904 may include, or interface with, an antenna (not shown). Further, implementations of the transmitter 904 may be limited to the modulator 906.

The data transmission system 900 is also communicatively coupled to a storage unit 908. In one implementation, the storage unit 908 is coupled to the encoder 902, and stores an encoded bitstream from the encoder 902. In another implementation, the storage unit 908 is coupled to the transmitter 904, and stores a bitstream from the transmitter 904. The bitstream from the transmitter 904 may include, for example, one or more encoded bitstreams that have been further processed by the transmitter 904. The storage unit 908 is, in different implementations, one or more of a standard DVD, a Blu-Ray disc, a hard drive, or some other storage device.

Referring to FIG. 10, a data receiving system 1000 is shown to which the features and principles described above may be applied. The data receiving system 1000 may be configured to receive signals over a variety of media, such as storage device, satellite, cable, telephone-line, or terrestrial broadcast. The signals may be received over the Internet or some other network.

The data receiving system 1000 may be, for example, a cell-phone, a computer, a set-top box, a television, or other device that receives encoded video and provides, for example, decoded video signal for display (display to a user, for example), for processing, or for storage. Thus, the data receiving system 1000 may provide its output to, for example, a screen of a television, a computer monitor, a computer (for storage, processing, or display), or some other storage, processing, or display device.

The data receiving system 1000 is capable of receiving and processing data information. The data receiving system or apparatus 1000 includes a receiver 1002 for receiving an encoded signal, such as, for example, the signals described in the implementations of this application. The receiver 1002 may receive, for example, a signal providing one or more of the HDR and SDR videos, or a signal output from the data transmission system 900 of FIG. 9.

The receiver 1002 may be, for example, adapted to receive a program signal having a plurality of bitstreams representing encoded HDR pictures. Typical receivers perform functions such as, for example, one or more of receiving a modulated and encoded data signal, demodulating the data signal from one or more carriers using a demodulator 1004, de-randomizing the energy in the signal, de-interleaving the data in the signal, and error-correction decoding the signal. The receiver 1002 may include, or interface with, an antenna (not shown). Implementations of the receiver 1002 may be limited to the demodulator 1004.

The data receiving system 1000 includes a decoder 1006. The receiver 1002 provides a received signal to the decoder 1006. The signal provided to the decoder 1006 by the receiver 1002 may include one or more encoded bitstreams. The decoder 1006 outputs a decoded signal, such as, for example, decoded video signals including video information, for example, using method 700.

The data receiving system or apparatus 1000 is also communicatively coupled to a storage unit 1007. In one implementation, the storage unit 1007 is coupled to the receiver 1002, and the receiver 1002 accesses a bitstream from the storage unit 1007. In another implementation, the storage unit 1007 is coupled to the decoder 1006, and the decoder 1006 accesses a bitstream from the storage unit 1007. The bitstream accessed from the storage unit 1007 includes, in different implementations, one or more encoded bitstreams. The storage unit 1007 is, in different implementations, one or more of a standard DVD, a Blu-Ray disc, a hard drive, or some other storage device.

The output data from the decoder 1006 is provided, in one implementation, to a processor 1008. The processor 1008 is, in one implementation, a processor configured for performing the SDR to HDR mapping. In some implementations, the decoder 1006 includes the processor 1008 and therefore performs the operations of the processor 1008. In other implementations, the processor 1008 is part of a downstream device such as, for example, a set-top box or a television.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1.  A method for processing a High Dynamic Range (HDR) picture, comprising:

    accessing the HDR picture; and
    generating a bitstream including a Standard Dynamic Range (SDR) picture responsive to the HDR picture, wherein the bitstream is generated based on both a modulation value and local illumination information.

2.  The method of claim 1, wherein information indicative of the local illumination information is signaled in the bitstream responsive to a dynamic range of the HDR picture exceeding a threshold.

3.  The method of claim 1, wherein the bitstream includes a syntax element indicative of whether the local illumination information is present in the bitstream.

4.  The method of claim 1, wherein a second local illumination information is determined based on the dynamic range of the HDR image, the modulation value and the local illumination information, and wherein the SDR picture is determined based on the second local illumination information.

5.  The method of claim 4, wherein the second local illumination information is determined as a weighted sum of the modulation value and the local illumination information.

6.  The method of claim 5, wherein the weight is based on the dynamic range of the HDR picture.

7. The method of claim 4, wherein the second local illumination information is determined to be Ba'(x,y) = Ba + $\lambda(\rho)$Ba$_{2D}$(x,y), wherein Ba'(x,y) is the second local illumination information, Ba is the modulation value, and Ba$_{2D}$(x,y) is the local illumination information, and wherein $\lambda(\rho)$Ba$_{2D}$(x,y) is signaled when the dynamic range of the HDR image exceeds a threshold.

8. A method for processing a bitstream, comprising:

   accessing a modulation value included in the bitstream;
   accessing a syntax element indicative of whether local illumination information is included in the bitstream; and
   generating a High Dynamic Range (HDR) picture responsive to a Standard Dynamic Range (SDR) picture included in the bitstream, the modulation value and the syntax element.

9. The method of claim 8, wherein the HDR picture is generated responsive to the SDR picture, the modulation value and the local illumination information if the syntax element indicates that the local illumination information is included in the bitstream.

10. The method of claim 9, wherein the HDR picture is a strict HDR picture, and wherein the generation is implemented by a strict HDR decoder.

11. The method of claim 8, wherein the HDR picture is generated responsive to the SDR picture and the modulation value if the syntax element indicates that the local illumination information is not included in the bitstream.

12. The method of claim 11, wherein the HDR picture is an Extended Dynamic Range (EDR) picture, and the generation is implemented by an HDR decoder.

13. The method of claim 8, wherein the HDR picture is generated responsive to the SDR picture and the modulation value, without the local illumination information, when the syntax element indicates that the local illumination information is included in the bitstream.

14. The method of claim 13, wherein the HDR picture is an EDR picture, and the generation is implemented by an EDR decoder.

15. An apparatus for processing an HDR picture or processing a bitstream, according to any of claims 1-14.

100

Start — 105

Determine a modulation value Ba
for an input image I — 110

Map, depending on Ba, the
input image to another image — 120

Process the mapped image — 130

End — 199

*FIG. 1*

codewords (10 bits), g(Ba,Y)

Ba=100
Ba=10
Ba=1
Ba=0.1

Y(nits)

*FIG. 2*

FIG. 3

FIG. 4

*FIG. 5*

600

Start ⟩—605

Determine a single modulation
value for an HDR image (Ba) —610

No ◁ $\rho > \rho_{HDR}$? ▷—615

Yes

Determine an illumination map for
the HDR image($Ba_{map}(x,y)$) —620

Determine adaptive
illumination information
($Ba'(x,y)=Ba+\lambda(\rho)Ba_{2D}(x,y)$) —630

Generate an SDR image based
on illumination information —650

Generate signaling for the
illumination information —660

Transmit SDR image and
illumination information signaling —670

Yes ◁ More
images need to be
processed? ▷—680

No

End ⟩—699

*FIG. 6*

700

Start — 705

Decode an SDR image, single modulation value (Ba) — 710

Decode flag F — 730

765

Generate illumination information (Ba'(x,y)=Ba) ← No — F true? — 740

Yes

Decode local illumination information ($\lambda(\rho)Ba_{2D}(x,y)$) — 750

Generate the illumination information (Ba'(x,y)=Ba+$\lambda(\rho)Ba_{2D}(x,y)$) — 760

Reconstruct an HDR image from the SDR image and the illumination information — 770

Yes — More images need to be processed? — 780

No

End — 799

*FIG. 7*

800

| | |
|---|---|
| 810 — Processor | Memory ~ 820 |
| 830 — Encoder/ Decoder | Storage Device ~ 840 |
| 850 — Communication Interface | |

860

Communication Channel

*FIG. 8*

900

908

901

902

Storage

904

Processor

Encoder

Transmitter

Output
Signal

Modulator

data transmission system

906

*FIG. 9*

1000

1007

Storage

1002

1006

1008

Input
Signal

Receiver

Decoder

Output
Video

Processor

Demodulator

data receiving system

1004

*FIG. 10*

Europäisches
Patentamt

European
Patent Office

Office européen
des brevets

# EUROPEAN SEARCH REPORT

**Application Number**

EP 15 30 5179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAKAO JINNO ET AL: "High Contrast HDR Video Tone Mapping Based on Gamma Curves", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E94A, no. 2, 1 February 2011 (2011-02-01), pages 525-532, XP001560934, ISSN: 0916-8508, DOI: 10.1587/TRANSFUN.E94.A.525 [retrieved on 2011-02-01] | 1,15 | INV. G06T5/00 G06T5/40 |
| Y | * abstract * * page 525, left-hand column, line 1 - page 528, left-hand column, last line * ----- | 2-14 | |
| X | US 2014/153820 A1 (LEE CHANG-MIN [KR] ET AL) 5 June 2014 (2014-06-05) | 1,15 | |
| Y | * abstract * * paragraphs [0003] - [0018] * * paragraphs [0052] - [0056] * ----- | 2-14 | |
| Y | EP 1 827 024 A1 (SHARP KK [JP]) 29 August 2007 (2007-08-29) * abstract * * paragraphs [0006] - [0011] * * paragraphs [0022] - [0024] * ----- | 2-14 | TECHNICAL FIELDS SEARCHED (IPC) G06T |
| Y | EP 2 819 414 A2 (SAMSUNG ELECTRONICS CO LTD [KR]) 31 December 2014 (2014-12-31) * abstract * * paragraphs [0002], [0009] - [0018] * * paragraphs [0067], [0074] - [0078] * ----- | 2-14 | |

The present search report has been drawn up for all claims

| Place of search | Date of completion of the search | Examiner |
|---|---|---|
| Munich | 7 July 2015 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5179

This annex lists the patent family members relating to the patent documents cited in  the above-mentioned European search report.
The members are as contained in the European Patent Office EDP file on
The European Patent Office is in no way liable for these particulars which are merely given for the purpose of information.

07-07-2015

| Patent document cited in search report | | | Publication date | Patent family member(s) | | | Publication date |
|---|---|---|---|---|---|---|---|
| US 2014153820 | A1 | | 05-06-2014 | CN | 103854259 | A | 11-06-2014 |
| | | | | KR | 20140072386 | A | 13-06-2014 |
| | | | | US | 2014153820 | A1 | 05-06-2014 |
| EP 1827024 | A1 | | 29-08-2007 | EP | 1827024 | A1 | 29-08-2007 |
| | | | | JP | 4607136 | B2 | 05-01-2011 |
| | | | | JP | 2007243942 | A | 20-09-2007 |
| | | | | JP | 2010213360 | A | 24-09-2010 |
| | | | | US | 2007201560 | A1 | 30-08-2007 |
| EP 2819414 | A2 | | 31-12-2014 | EP | 2819414 | A2 | 31-12-2014 |
| | | | | US | 2015003749 | A1 | 01-01-2015 |

EPO FORM P0459

For more details about this annex : see Official Journal of the European Patent Office, No. 12/82